# EUROPÄISCHE PATENTSCHRIFT

(11) **EP 2 105 531 B1**
(45) Veröffentlichungstag und Bekanntmachung des Hinweises auf die Patenterteilung: **18.08.2010**
(21) Anmeldenummer: 09156148.0
(22) Anmeldetag: 25.03.2009
(51) Int. Cl.: D21G 1/02, F16C 13/02

(54) **Walzenpresse**
Roller press
Presse à rouleaux

(30) Priorität: 27.03.2008 DE 102008016000
(43) Veröffentlichungstag der Anmeldung: 30.09.2009
(73) Patentinhaber: Andritz Küsters GmbH, 47805 Krefeld (DE)
(72) Erfinder: Petschauer, Franz, 47805 Krefeld (DE); Hader, Peter, 47805 Krefeld (DE); Meitner, Robert, 47805 Krefeld (DE); Brendel, Bernhard, 47805 Krefeld (DE); Doerkes, Ralf, 47805 Krefeld (DE); Schlutzkus, Winfried, 47805 Krefeld (DE); Mausser, Wilhelm, 47805 Krefeld (DE)
(74) Vertreter: Viering, Jentschura & Partner

(56) Entgegenhaltungen:
- CH-A5- 560 852
- DE-A1- 4 417 760
- US-A- 5 850 785

## Beschreibung

Die Erfindung betrifft eine Walzenpresse gemäß dem Oberbegriff des Anspruchs 1. Die Erfindung betrifft damit z.B. eine Walzenpresse, wie z.B. eine Nasspresse, zur Behandlung einer laufenden Bahn, wie z.B. einer Papierbahn oder einer Zellstoffbahn.

Eine Walzenpresse der eingangs genannten Art ist z.B. aus der CH 560 852 A5 bekannt.

Bei Walzenpressen mit Pressspalt zwichen erster und zweiter Presswalze sind Maßnahmen zur Kompensation von thermisch bedingten Längenänderungen der Walzen zu treffen. In der EP 0 531 491 B1 wird hierzu z.B. eine Walzenpresse vorgeschlagen, bei der die beiden Presswalzen an zumindest einem Ende in Lagerböcken gelagert sind, die ihrerseits über Zugstäbe miteinander verbunden sind, die in Richtung der Hauptachsen der Presswalzen derart beweglich sind, dass die Lagerböcke entsprechend relativ zueinander beweglich sind. Indem sich hierdurch die Lagerböcke relativ zueinander entlang der Hauptachsen der Presswalzen verlagern können, können Längenänderungen der Presswalzen kompensiert werden, ohne dass eine Relativverschiebung zwischen der Presswalze und dem Lagerbock zugelassen werden muss. Die Lagerböcke relativ zueinander beweglich zu gestalten ist jedoch aufwändig und instabil im Hinblick auf das Halten der Presswalzen in der von ihnen aufgespannten Pressebene (=definiert durch die für die Erzielung eines optimalen Pressspaltes gewünschte Lage der Presswalzenachsen relativ zueinander). Zur Lösung dieses Problems ist es z.B. in der EP 0 571 582 B1 bei wie oben erläutert zueinander relativ beweglichen Lagerböcken vorgesehen, zusätzlich ein Führungsflächenpaar parallel zur Pressebene vorzusehen, welches verhindert, dass die Presswalzen aus der gewünschten Pressebene gelangen.

Aus der DE 44 17 760 A1 ist eine Pressvorrichtung bekannt, mit einer zwei Presswalzen, die an ihren Enden in Lagerböcken gelagert sind, wobei die Lagerböcke über Zuglaschen miteinander verbunden sind, die eine Axialverschiebung der Lagerböcke relativ zueinander zulassen, wobei die Lagerböcke über Gelenklager am Fundament gelagert sind.

Durch die Erfindung wird eine Walzenpresse mit einer ersten Presswalze und einer zweiten Presswalze, die miteinander einen Pressspalt bilden, geschaffen, mit der eine Kompensierung von Längenänderungen der Presswalzen sicher und dennoch unkompliziert unter Beibehaltung eines guten Pressergebnisses erzielt werden kann.

Die Erfindung stellt eine Walzenpresse mit den Merkmalen des Anspruchs 1 bereit. Weitere Ausführungsformen der Erfindung sind in den abhängigen Ansprüchen beschrieben.

Gemäß der Erfindung bilden die beiden Lagerböcke am ersten Ende der Presswalzen eine bezüglich Relativbewegungen zueinander in Längsrichtung der Presswalzen starre Einheit, wobei jedoch je nach Ausführung der Verbindung zwischen den beiden Lagerböcken eine Relativbewegung der Lagerböcke zueinander in Richtung quer zu den Presswalzenachsen, z.B. in der oder quer zu der von den Presswalzen definierten Pressebene, möglich sein können.

So können nach einer Ausführungsform die beiden Lagerböcke der ersten Lagerbockeinheit aus einem Stück gefertigt sein, sodass sie insgesamt einen Starrkörper bilden. Die beiden Lagerböcke können auch separat gefertigt und dann zu einem insgesamt starren, d.h. hinsichtlich aller Freiheitsgrade starren, Gesamtkörper zusammengefügt sein, wie z.B. in nicht lösbarer Form durch Verschweißen, Vernieten oder in lösbarer Form durch Verschrauben der Lagerböcke miteinander. Demnach sind nach einer Ausführungsform die Lagerböcke der ersten und/oder der zweiten Lagerbockeinheit insgesamt starr aneinander befestigt, z.B. einstückig miteinander ausgebildet, miteinander verschraubt oder miteinander verschweißt.

Bei dieser insgesamt starren Ausführung der ersten Lagerbockeinheit sind die Lagerböcke in Pressrichtung, die in der durch die Presswalzenlängsachsen aufgespannten Pressebene sowie quer zu den Presswalzenlängsachsen verläuft, in der Regel relativ unnachgiebig und werden daher in Pressrichtung kaum auseinander gedehnt. Der Pressspalt bleibt daher relativ konstant. Wie oben erläutert ist die Pressebene eine durch die Presswalzen aufgespannte Ebene, wobei sich ihre Lage aus jener Lage der Presswalzen relativ zueinander ergibt, die aus einem gewünschten optimalen Pressspalt resultiert. Bei der insgesamt starren Lagerbockeinheit kann keiner der Lagerböcke relativ zum anderen in Richtung quer zur Pressebene aus dieser heraus gelangen; es gibt aber auch Ausführungsformen, bei denen dies bis zu einem bestimmten Grad möglich ist.

Es ist ferner möglich, die Lagerböcke der ersten Lagerbockeinheit über zumindest in Längsrichtung der Presswalzen nicht biegeweiche oder insgesamt nicht biegeweiche Zugstäbe miteinander zu verbinden, sodass sich die Lagerböcke unter entsprechender Vergrößerung/Anpassung des Pressspaltes sowie unter elastischer Dehnung der Zugstäbe in Pressrichtung auseinander bewegen können. Solche Zugstäbe können z.B. Klammern sein, die ein C- oder U-Form haben und die z.B. in Längsrichtung der Presswalzen oder quer dazu beidseitig an die Lagerböcke der ersten Presseinheit angesetzt werden, um in ein entsprechend komplementär geformtes Anschlussstück am jeweiligen Lagerbock einzugreifen, sodass die Lagerböcke in Pressrichtung elastisch aneinander geklemmt sind, wobei sie in Presswalzenrichtung relativ zueinander unbewegbar bleiben.

Gemäß der Erfindung stehen damit z.B. folgende Varianten zur Verfügung:
- Ein Loslager zwischen erster Lagerbockeinheit und Maschinenrahmen oder zwischen zweiter Lagerbockeinheit und Maschinenrahmen, wobei die Enden der ersten und der zweiten Presswalzen längsfest in den Lagerböcken gelagert sind.
- Ein Schwenklager zwischen erster Lagerbockeinheit und Maschinenrahmen und zwischen zweiter Lagerbockeinheit und Maschinenrahmen, wobei die Enden der ersten und der zweiten Presswalzen längsfest in den Lagerböcken gelagert sind.
- Die erste oder die zweite Presswalze ist an genau einem Ende relativ zum zugehörigen Lagerbock längsverschiebbar gelagert, wobei die verbleibenden Enden der ersten und der zweiten Presswalzen relativ zu den Lagerböcken längsfest gelagert sind.

Die Zugstäbe, die die Lagerböcke der ersten Lagerbockeinheit miteinander verbinden, können auch als Zuglaschen ausgebildet sein, die z.B. plattenförmig ausgebildet sind, z.B. als Rechteckplatten, und die in Richtung quer zu den Presswalzen, z.B. quer zur Pressebene, auf einander gegenüberliegenden Seiten der Lagerböcke an diesen angreifen. Um die Zuglaschen leicht von den Lagerböcken lösen zu können, ist es z.B. vorgesehen, die Zuglaschen über lösbare Querbolzen, d.h. lösbare Bolzen, die quer zur Pressebene verlaufen, mit dem jeweiligen Lagerbock zu verbinden; um hierbei eine Schwenkbewegung des jeweiligen Lagerbocks relativ zu den Laschen zu verhindern, was andernfalls eine ungewünschte Relativbewegung der Lagerböcke in der Pressebene (nämlich entlang der Hauptachsen der Presswalzen) zu Folge hätte, ist die jeweilige Lasche z.B. mit mehreren, z.B. zwei, Querbolzen am jeweiligen Lagerbock befestigt, die zur Aufnahme des gewünschten Drehmoments nicht koaxial, sondern in einem Abstand parallel zueinander angeordnet sind. Es kann auch nur eine einzige Lasche zentral (d.h. in der Pressebene verlaufend) in der wie oben beschriebenen Weise zwischen den Lagerböcken der ersten Lagerbockeinheit angebracht sein. Nach einer Ausführungsform sind die Lagerböcke der ersten und/oder der zweiten Lagerbockeinheit über in Längsrichtung der Presswalzen biegefeste Zuglaschen aneinander gehalten, die quer zur Längsrichtung der Presswalzen an einander gegenüberliegenden Seiten der Lagerböcke an diesen unschwenkbar, z.B. über je zwei Querbolzen pro Lagerbock, angebracht sind.

Nach einer Ausführungsform ist eine der Presswalzen, z.B. die dem ersten Schwenklager gelegene Presswalze, an einem Ende, z.B. am zweiten, dem ersten Schwenklager entfernter gelegenen Ende, in ihrer dortigen Lagerung in Längsrichtung der Presswalzen längsverschiebbar gelagert.

Nach einer Ausführungsform sind mehrere Laschen auf jeder Seite der Pressebene vorgesehen und z.B. wie oben erläutert an den Lagerböcken der ersten Presseinheit angebracht, wodurch auf jeder Seite ein Laschenpaket mit mehreren Laschen, z.B. mit 2, 3, 4, 5, 6 oder mehr Laschen vorliegt.

Bei Verwendung einer Mantelwalze, wie z.B. einer Schuhwalze, ist es wünschenswert, wenn der Walzenmantel ohne Abmontieren des Lagerbocks von der Presswalze ausgetauscht werden kann. Hierzu kann/können z.B. die Lasche oder die Laschen auf beiden Seiten der Pressebene nach Entfernen aller Bolzen seitlich in Richtung quer zur Pressebene entnommen werden; es ist auch denkbar, alle bis auf einen Bolzen (d.h. bei einer Vier-Bolzen-Befestigung dann drei Bolzen) seitlich herausnehmen und die jeweilige Lasche oder das jeweilige Laschenpaket mit den mehreren Laschen um den jeweils verbleibenden Bolzen parallel zur Pressebene, z.B. in Richtung weg von den Presswalzen, zu verschwenken; letzteres erlaubt es in einfacher Weise, z.B. einen gebrauchten Walzenmantel axial über jenen Lagerbock, von dem die Laschen axial weggeklappt wurden, hinweg, z.B. auch über die umgeklappten Laschen hinweg, zu entnehmen und durch einen neuen Walzenmantel zu ersetzen. Nach dem Walzenmanteltausch wird die oder werden die Laschen wieder zurückgeklappt und für den Pressbetrieb unschwenkbar mit dem jeweiligen Lagerbock der ersten Lagerbockeinheit verbunden.

Die erste und/oder die zweite Presswalze können als Schuhwalze mit einem flexiblen Walzenmantel und einem von innen gegen den Walzenmantel drückenden Pressschuh vorgesehen sein. Hierbei kann der Pressschuh der ersten Presswalze z.B. mit einer der Walzeninnenseite zugewandten Konkavität vorgesehen sein, welche in etwa komplementär zur Konvexität (z.B. aufgrund der Kreiszylinderform der Walze vorliegend) der zweiten Walze ist, so dass der flexible Walzenmantel unter Anpassung seiner Umfangsfläche an die Konvexität der anderen Walze gegen diese pressbar ist, um dadurch einen in Bahnlaufrichtung, d.h. in Richtung quer zu den Presswalzen, verlängerten Pressspalt auszubilden. Diese Ausgestaltung wird z.B. für Nasspressen in Papier- und/oder Zellstoffherstellanlagen angewandt.

Die Lagerböcke am zweiten Ende der Presswalzen können auf eine wie oben für die Lagerböcke der ersten Lagerbockeinheit beschriebene Weise ausgebildet und miteinander verbunden sein, sodass sie eine zweite Lagerbockeinheit bilden. Die erste und die zweite Lagerbockeinheit können gleich strukturiert vorgesehen sein. Die erste Lagerbockeinheit kann an einer Triebseite der Walzenpresse angeordnet sein, an der die Presswalzen mit einem Antriebsmotor verbunden sind, oder aber auch an der Bedienseite der Walzenpresse angeordnet sein.

Die Walzenpresse kann als erste und als zweite Presswalze jeweils Mantelwalzen, z.B. Schuhwalzen mit walzeninternem Pressschuh, oder massive Walzen oder Kombinationen hieraus, z.B. als erste Presswalze eine Mantelwalze und als zweite Presswalze eine Massivwalze, aufweisen.

Zum Erreichen der Schwenkbarkeit der ersten Lagerbockeinheit ist z.B. das Schwenklager an einem der Lagerböcke vorgesehen, z.B. in Form eines Bolzengelenks mit einem Gelenkbolzen oder in Form eines ballig geformten Lagerbocks, der auf einer Aufstützfläche abrollen und/oder schwenkend gleiten kann. Das Schwenklager erstreckt sich mit seiner Schwenkachse zweckmäßigerweise quer zur Pressebene. Damit kann zum Ausgleich einer Längenänderung der ersten und/oder der zweiten Presswalze die gesamte erste Lagerbockeinheit entsprechend schwenken, sodass die erste und/oder die zweite Presswalze in ihren Lagerböcken an beiden Enden der Presswalzen längsfest gelagert werden können. Falls die erste Presswalze an beiden ihrer Enden längsfest in den Lagerböcken gelagert ist, dann kann die zweite Presswalze z.B. an einem ihrer Enden längsfest und am anderen Ende relativ zum Lagerbock längsbewegbar gelagert sein. Sind beide Presswalzen an ihren beiden Enden längsfest gelagert, dann kann z.B. die erste Lagerbockeinheit insgesamt zusätzlich zu ihrer Schwenkbarkeit in Richtung der Presswalzen längsverschiebbar sein; d.h. das Schwenklager oder die Schwenkachse ist in Richtung der Presswalzen längsverschiebbar vorgesehen. Es kann aber auch die zweite Lagerbockeinheit längsverschiebbar vorgesehen sein.

Zum Ausgleich von Durchbiegungen der Presswalzen oder von Durchbiegungen der die Presswalzen tragenden Träger (z.B. bei Schuhwalzen) können die Presswalzen in solche Bewegungen zulassenden Lagern in den Lagerböcken gelagert sein, wie z.B. in Kugelbuchsen bzw. Pendelbuchsen oder Tonnenlagern.

Im Pressbetrieb treten neben der Presskraft, die zu Zugbelastungen in der Verbindung, wie z.B. den Zugstäben, der Lagerböcke führt, auch Kräfte in Bahnlaufrichtung (=quer zur Pressebene) auf; diese Kräfte versuchen in der Regel die jeweilige Presswalze in die Bahnlaufrichtung mitzunehmen, und zwar aufgrund einer Bahnmaterial-Aufstauung in Bahnlaufrichtung vor dem Pressspalt.

Wenn hierbei z.B. nur die Lagerböcke der einen der beiden Presswalzen unmittelbar am Maschinenrahmen, wie z.B. einem stationären Maschinenfundament, einem stationären Maschinengestell und dergleichen Maschinenrahmen, gelagert sind, wohingegen die Lagerböcke der anderen der beiden Presswalzen nur über die Verbindung deren Lagerböcke mit den Lagerböcken der einen Presswalze mit dem Maschinenrahmen in Verbindung stehen (=indirekte Verbindung mit dem Maschinenrahmen), dann kann es bei der Verwendung der Zugstäbe, z.B. der seitlich der Presswalzen angeordneten Klammern oder Laschen, zu einer leichten Auswanderung der anderen der beiden Presswalzen relativ zu der einen Presswalze in Bahnlaufrichtung aus der Pressebene heraus kommen, weil zwischen den Lagerböcken keine diese Auswanderung verhindernden Führungsflächen vorgesehen sind und die seitlich angeordneten Zugstäbe in dieser Querrichtung als solche keine Stabilisierung bringen und sich auch beidseitig der Presswalzen etwas unterschiedlich längen können. Die sich hieraus ergebenden Änderungen des Pressspalts sind aber so, dass das Pressergebnis nicht unangemessen beeinträchtigt wird. Zusätzlich kann aber auch eine Passfeder in der Verbindung zwischen den Lagerböcken vorgesehen sein, welche über eine zur Pressebene parallele Führungsfläche eine Relativbewegung der Lagerböcke quer zur Pressebene zusätzlich unterbindet.

Bei der Walzenpresse können auch Momente um eine quer zu den Presswalzenachsen und in der Pressebene verlaufende Achse (z.B. Hoch- oder Vertikalachse) und/oder Momente um eine parallel zu den Presswalzenachsen verlaufende Achse auftreten. Gegenüber den erstgenannten Momenten sind die Lagerbockeinheiten dann gegenüber einer Kreis-Verschiebung senkrecht zur Pressebene zu sichern; dies ist z.B. am frei auf dem Maschinenrahmen aufliegenden und dort längsverschiebbaren Lagerbock der ersten Presseinheit durch eine zwischen dem Lagerbock und dem Maschinenrahmen angeordnete Passfeder möglich. Gegenüber den zweitgenannten Momenten sind die Lagerbockeinheiten dann gegen ein Kippen in Bahnlaufrichtung (Maschinenrichtung) zu sichern; dies ist z.B. am frei auf dem Maschinenrahmen aufliegenden und dort längsverschiebbaren Lagerbock der ersten Presseinheit durch eine zwischen dem Lagerbock und dem Maschinerahmen angeordnete Passfeder möglich, die sich in Richtung parallel zur Pressebene und quer zu den Presswalzen mit einer Länge erstreckt, die das Verkippen des Lagerbocks und damit der zugehörigen Lagerbockeinheit um die genannte Achse verhindert. Durch die Festlagerung des Lagerbocks der zweiten Lagerbockeinheit ist die zweite Lagerbock gegen Verschiebungen und Verkippungen durch die vorstehend genannten Momente ausreichend gesichert. Bei einer Gelenk-Los-Lagerung des Lagerbocks der ersten Lagerbockeinheit mit geführt längsverschiebbarem Gelenk oder mit geführt längsverschiebbarer Gelenkachse ist die Sicherung ebenfalls gegeben.

Die erfindungsgemäße Walzenpresse kann in Papierherstellanlagen oder Zellstoffanlagen, wie Tissueherstellanlagen, als Nasspresse und/oder als Schuhkalander eingesetzt werden. Beim Schuhkalander ist dann z.B. die erste oder die zweite Presswalze als Schuhwalze, d.h. als Mantelwalze mit internem Pressschuh ausgebildet, und die andere Presswalze ist z.B. als Massiv- oder als Mantelwalze ausgebildet und ist beheizt.

Die Erfindung wird im Folgenden anhand von Ausführungsbeispielen mit Bezugnahme auf die Zeichnung weiter erläutert. In der Zeichnung zeigen:
Fig. 1 eine schematische Seitenansicht einer Walzenpresse gemäß einer Ausführungsform der Erfindung,
Fig. 2 eine schematische Seitenansicht einer Walzenpresse gemäß einer Ausführungsform Erfindung,
Figur 3 eine abgeschnittene, schematische Seitenansicht einer Walzenpresse gemäß einer Ausführungsform der Erfindung,
Figuren 4A und 4B eine abgeschnittene, schematische Seitenansicht einer Walzenpresse gemäß einer Ausführungsform der Erfindung bzw. die zugehörige schematische Frontansicht,
Figuren 5A und 5B eine abgeschnittene, schematische Seitenansicht einer Walzenpresse gemäß einer Ausführungsform der Erfindung bzw. die zugehörige schematische Frontansicht,
Figuren 6A und 6B eine abgeschnittene, schematische Seitenansicht einer Walzenpresse gemäß einer Ausführungsform der Erfindung bzw. die zugehörige schematische Frontansicht,
Figuren 7A, 7B und 7C schematische Frontansichten von weiteren Ausführungsformen der Erfindung,
Figuren 8A und 8B jeweils eine abgeschnittene, schematische Seitenansicht einer Walzenpresse gemäß einer Ausführungsform der Erfindung und
Figuren 9A, 9B und 9C eine abgeschnittene, schematische Seitenansicht einer Walzenpresse gemäß einer Ausführungsform der Erfindung, die zugehörige schematische Frontansicht bzw. eine schematische Seitenansicht einer zugehörigen weiteren Ausführungsform der Erfindung.

In den Figuren sind für gleiche Bauteile die gleichen Bezugszeichen verwendet.

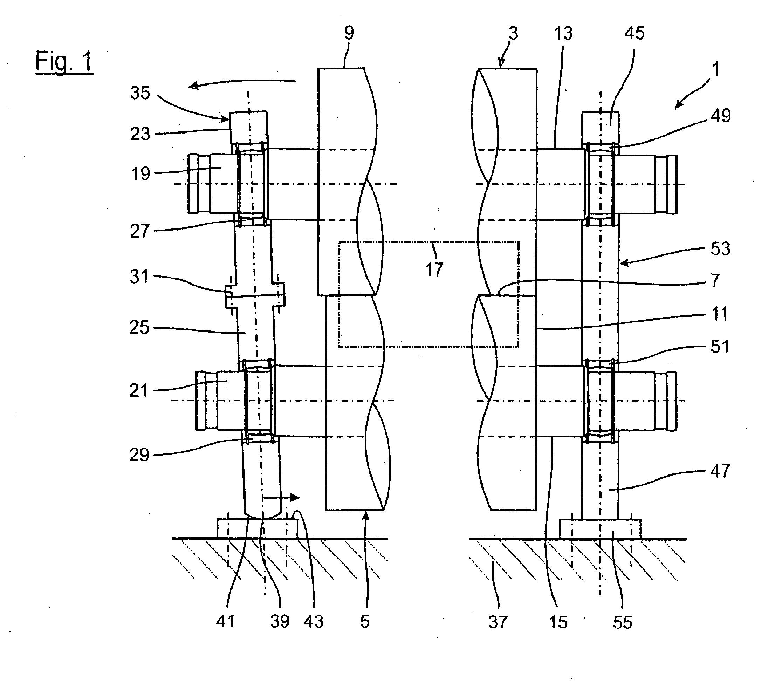

Figur 1 zeigt eine Walzenpresse 1 gemäß einer Ausführungsform der Erfindung, welche eine erste Presswalze 3 und eine dazu benachbart und parallel angeordnete zweite Presswalze 5 aufweist, die miteinander einen langgestreckten Pressspalt 7 bilden. Die Presswalzen 3, 5 sind jeweils als Mantelwalzen mit einem Walzenmantel 9, 11 und einem Mantelträger 13, 15 ausgebildet, dessen Trägerachse z.B. koaxial oder auch exzentrisch zur Achse des zugehörigen Walzenmantels 13, 15 durch diesen verläuft und auf dem der Walzenmantel 13, 15 drehbar abgestützt ist und z.B. über einen Pressschuh gegen den jeweils anderen Walzenmantel 13, 15 gedrückt ist. Die Presswalzen 3, 5 sind vertikal übereinander angeordnet; eine von den Presswalzen 3, 5, d.h. in der Regel von deren Längsachsen, aufgespannte Pressebene 17 verläuft damit im Wesentlichen vertikal. Die Presswalzen 3, 5 können aber z.B. auch horizontal (horizontal verlaufende Pressebene) oder bezüglich der Vertikalen/Horizontalen schräg (bzgl. der Vertikalen/Horizontalen schräg verlaufende Pressebene) zueinander benachbart angeordnet sein.

Die Presswalzen 3, 5 sind an einem ersten Ende 19, 21 mittels ihrer Mantelträger 13, 15 in zueinander benachbarten Lagerböcken 23, 25 (hier vertikal benachbarten Lagerböcken mit einem oberen und einem unteren Lagerbock 23 bzw. 25) über Lagereinheiten 27, 29 gelagert, die hier als Kugelbuchsen ausgebildet sind, wobei die jeweilige Lagereinheit 27, 29 eine Durchbiegung des zugehörigen Mantelträgers 13, 15 erlaubt, indem sie eine Verdrehung des aufgenommen Abschnitts des Mantelträgers 13, 15 relativ zum zugehörigen Lagerbock 23, 25 um eine Achse quer zu den Presswalzen 3, 5 zulässt.

Die Lagerböcke 23, 25 sind separate Bauteile, die über eine schematisch dargestellte Verbindung, z.B. über Schrauben 31, 33 zu einer insgesamt starren, ersten Lagerbockeinheit 35 fest miteinander verbunden sind. Die erste Lagerbockeinheit 35 ist über den unteren Lagerbock 25 mit einem Maschinenrahmen 37, hier einem Fundament oder einem Maschinensockel, derart angebracht, dass die erste Lagerbockeinheit 35 insgesamt um ein erstes Schwenklager 39, das mit seiner Schwenkachse zu den Presswalzen 2, 5 und zu der Pressebene 17 quer verläuft, schwenkbar ist. In diesem Falle ist der untere Lagerbock 25 an seiner dem Maschinenrahmen 37 zugewandten Stirnseite mit einem ballig ausgebildeten Kontaktabschnitt 41 mit parallel zur Pressebene 17 verlaufender Krümmung ausgebildet, welcher Kontaktabschnitt 41 sich auf einen horizontal verlaufenden Aufnahmeabschnitt 43 des Maschinenrahmens 37 abstützt. Der Kontaktabschnitt 41 kann damit auf dem Aufnahmeabschnitt 43 entlang der Pressebene abrollen oder gleitend schwenken, wodurch die erste Lagerbockeinheit 35 entlang der Pressebene 17 schwenken kann. Aufgrund der Rollbewegung oder Gleit-Schwenkbewegung des Aufnahmeabschnitts 43 ist die zugehörige Schwenkachse des ersten Schwenklagers 39 nicht an einer Position fixiert, sondern bewegt sich entsprechend der Rollbewegung oder Gleit-Schwenkbewegung gezwungen mit.

Der ballige Kontaktabschnitt 41 ist in Längsrichtung der Presswalzen 3, 5 verschiebbar auf dem Kontaktabschnitt 43 angeordnet, so dass sich die Schwenkachse des Schwenklagers 39 unabhängig von der Schwenkbewegung in Längsrichtung der Presswalzen 3, 5 verlagern kann.

An ihrem zweiten Ende sind die Presswalzen 3, 5 über ihre Mantelträger 13, 15 in vertikal zueinander benachbarten Lagerböcken 45, 47 mit einem oberen Lagerbock 45 und einem unteren Lagerbock 47 wie am ersten Ende in entsprechenden, jeweiligen Lagereinheiten 49, 51 gelagert. Die Lagerböcke 45, 47 am zweiten Ende der Presswalzen 3, 5 bilden eine zweite Lagerbockeinheit 53 und sind miteinander einstückig ausgebildet (die Lagerböcke 45, 47 der zweiten Lagerbockeinheit 53 könnten auch separat ausgebildet und wie in Figur 1 miteinander verschraubt sein), wobei der untere Lagerbock 47 fest mit dem Maschinenrahmen 37 verschraubt ist, sodass an dieser Position ein Festlager 55 ausgebildet ist, wohingegen das Schwenklager 39 wie oben erläutert demgegenüber auch als ein Loslager ausgebildet ist.

Der jeweilige obere Lagerbock 23, 45 ist nur über seine Verbindung mit dem jeweils zugehörigen unteren Lagerbock 25, 47 am Maschinenrahmen 37 angebracht. Es ist auch möglich, das hier am unteren Lagerbock 25 der ersten Lagerbockeinheit 35 vorgesehene Schwenklager 39 mit Loslagerfunktion am oberen Lagerbock 23 der ersten Lagerbockeinheit 35 vorzusehen und entsprechend das hier am unteren Lagerbock 47 der zweiten Lagerbockeinheit 53 vorgesehene Festlager 55 am oberen Lagerbock 45 der zweiten Lagerbockeinheit 53 vorzusehen, sodass dann der jeweilige untere Lagerbock 25, 47 am jeweiligen oberen Lagerbock 23, 45 hängt (Hängeanordnung).

Die Mantelträger 13, 15 sind in allen Lagereinheiten 27, 29, 49, 51 der Lagerböcke 23, 25, 45, 47 der ersten und der zweiten Lagerbockeinheit 35, 53 längsfest gelagert, d.h. eine Verschiebung relativ zu den Lagerböcken 23, 25, 45, 47 in Längsrichtung der Presswalzen 3, 5 ist nicht zugelassen.

Im Falle einer Längenänderung der oberen und/oder der unteren Presswalze 3, 5 wird diese Längenänderung durch entsprechendes Verschwenken bzw. Verkippen der ersten Lagerbockeinheit 35 parallel zur Pressebene 17 ausgeglichen, wobei der Kontaktabschnitt 41 entlang der Pressebene 17 auf dem Aufnahmeabschnitt 43 drehbewegt entlang gleitet, sodass sich die Schwenkachse 38 entsprechend in Richtung der Längsachse der Presswalzen 3, 5 mitbewegt.

Die erste Lagerbockeinheit 35 ist z.B. auf der Bedienseite und die zweite Lagerbockeinheit 53 auf der Triebseite der Walzenpresse 1 angeordnet. Bei einem Wechsel des Walzenmantels 9, 11 der oberen und der unteren Presswalzen wird z.B. die Verbindung zwischen den Lagerböcken 23, 25 der ersten Lagerbockeinheit 35 gelöst und der obere und der untere Lagerbock 23, 25 mit Vertikalabstand zueinander und zum Maschinenrahmen 37 angehoben, sodass die Walzenmäntel 9, 11 über die Lagerböcke hinüber in Längsrichtung der Presswalzen 3, 5 entnehmbar und neue Walzenmäntel entsprechend aufziehbar sind.

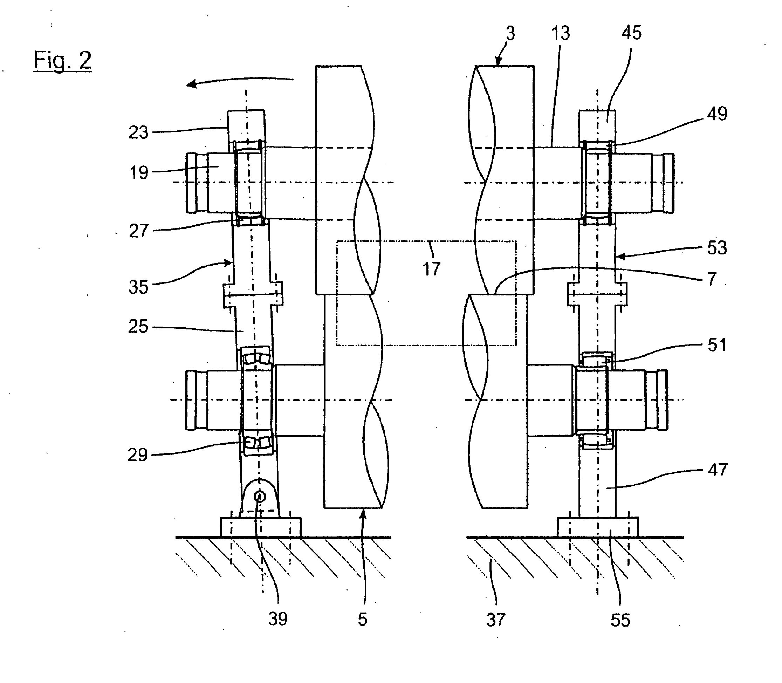

Bei der in der Figur 2 dargestellten Ausführungsform weist die Walzenpresse 1 ebenfalls zwei vertikal benachbarte, parallele Presswalzen 3, 5 auf, die zwischen sich einen Pressspalt 7 bilden und von denen die obere Presswalze 3 eine Mantelwalze mit Walzenmantel 9 und internem Mantelträger 13 und die untere Presswalze 5 eine Massivwalze ist.

Die obere Presswalzen 3 ist über ihren Mantelträger 13 am ersten Ende 19 und am zweiten Ende in einem jeweiligen oberen Lagerbock 23, 45 gelagert, wobei der Mantelträger 13 hierzu mit seinem jeweiligen Endabschnitt längsfest in eine Kugelbuchse einer jeweiligen Lagereinheit 27, 49 eingreift, sodass sich der jeweilige Endabschnitt zusammen mit der Kugelbuchse relativ zum zugehörigen oberen Lagerbock 23, 45 um eine Achse quer zu Walzenachse drehen kann, um so Durchbiegungen des Mantelträgers 13 der oberen Presswalze 3 zu erlauben.

Die massive untere Presswalze 5 hat am ersten und am zweiten Ende jeweils einen axial vorstehenden Lagerzapfen, der drehbar in einer zugehörigen Lagereinheit 29, 51 in einem zugehörigen unteren Lagerbock 25, 47 aufgenommen ist. Hierbei ist die untere Presswalze 5 an ihrem ersten Ende in dem unteren Lagerbock 25 längsfest aufgenommen, wobei die zugehörige Lagereinheit 29 so ausgebildet ist, hier als ein Drehlager in Form eines doppelreihigen Tonnenlagers, dass sie eine Verdrehung des Lagerzapfen relativ zum unteren Lagerbock 29 zulässt, z.B. um eine Durchbiegung der Presswalze 5 zu erlauben. An ihrem zweiten Ende ist die untere Presswalze 5 drehbar und längsbewegbar in dem zugehörigen unteren Lagerbock 25 aufgenommen, wobei die zugehörige Lagereinheit 51 so ausgebildet ist, z.B. als ein Drehlager in Form eines einreihigen Tonnenlagers, dass sie eine Verdrehung des Lagerzapfens relativ zum unteren Lagerbock 47 zulässt, um z.B. eine Durchbiegung der Presswalze 5 zu erlauben.

Der obere und der untere Lagerbock 23, 25; 45, 47 am ersten und am zweiten Ende der Walzenpressen 3, 5 sind zueinander benachbart und bilden eine erste bzw. eine zweite Lagerbockeinheit 35; 53 und sind über eine Schraubenverbindung insgesamt starr miteinander verbunden. Der unteren Lagerbock 47 der zweiten Lagerbockeinheit 53 ist fest am Maschinenrahmen 37, hier in Form eines Fundaments, angebracht, sodass die zweite Lagerbockeinheit 53 über ein insgesamt starres Festlager 55 am Maschinenrahmen 37 befestigt ist.

Der untere Lagerbock 25 der ersten Lagerbockeinheit 35 ist über ein als Bolzengelenklager mit stationärer Schwenkachse ausgebildetes Schwenklager 39 am Maschinenrahmen 37 angebracht. Die Schwenkachse verläuft quer zu den Presswalzen 3, 5 bzw. quer zu einer von den Presswalzen 3, 5 bzw. deren Längsachsen aufgespannten Pressebene 17

Für die obere Presswalze 3, die in der ersten und in der zweiten Lagerbockeinheit 35, 53 längs unverschiebbar gelagert ist, bilden das Schwenklager 39 und das Festlager 55 eine Fest-Los-Lagerung, die eine Längenänderung der oberen Presswalze 3 erlaubt, indem die erste Lagerbockeinheit 35 insgesamt um die quer zu den Presswalzen 3, 5 verlaufende Schwenkachse des Schwenklagers 39 kippen kann. Diese Kippbewegung wird durch die untere Presswalze 5 nicht behindert, da die Lagereinheit 51 im unteren Lagerbock 47 der zweiten Lagerbockeinheit 53 als ein Loslager ausgebildet ist.

Alternativ kann die als Loslager ausgebildete Lagereinheit 51 auch durch ein Festlager ersetzt werden, z.B. in der Form der anderen Lagereinheiten 27, 29, 49. In diesem Falle kann z.B. ähnlich wie in der Ausführungsform von Figur 1 das Schwenklager 39 als Loslager ausgebildet sein und in Richtung der Presswalzen bewegbar sein (z.B. kann der maschinenrahmenseitige Bolzengelenkteil in Längsrichtung der Presswalzen geführt bewegbar sein); es ist alternativ auch möglich, das Festlager 55 zwischen dem unteren Lagerbock 47 der zweiten Lagerbockeinheit 53 und dem Maschinenrahmen 37 durch ein Loslager, z.B. ein längs der Presswalzen 3, 5 geführt bewegbares Lager, zu ersetzen.

Die Lagerung der beiden Lagerbockeinheiten 35, 53 am Maschinenrahmen 37 erfolgt wie bei der Ausführungsform von Figur 1 über die unteren Lagerböcke 25 und 47. Jedoch kann, wie z.B. auch in der Ausführungsform von Figur 1, die Lagerung der Lagerbockeinheiten 37, 53 am Maschinenrahmen 37 über einen unteren Lagerbock 25, 47 der einen der Lagerbockeinheiten 37, 53 und einen oberen der anderen der Lagerbockeinheiten 37, 53 erfolgen (teilweise Hängeanordnung) oder auch über beide obere Lagerböcke 23, 45 (Hängeanordnung).

Als Triebseite wird gemäß der Ausführungsformen von Figuren 1 und 2 zum Beispiel die der zweiten Lagerbockeinheit 53 zugewandte Pressenseite herangezogen, weil das dortige Festlager 55 eine größere Stabilität hinsichtlich des Aufbringens von Antriebskräften auf die Presswalzen 3, 5 mit sich bringt. Als Bedienseite wird dann die der ersten Lagerbockeinheit 35 zugewandte Seite verwendet. Es ist jedoch auch umgekehrt möglich.

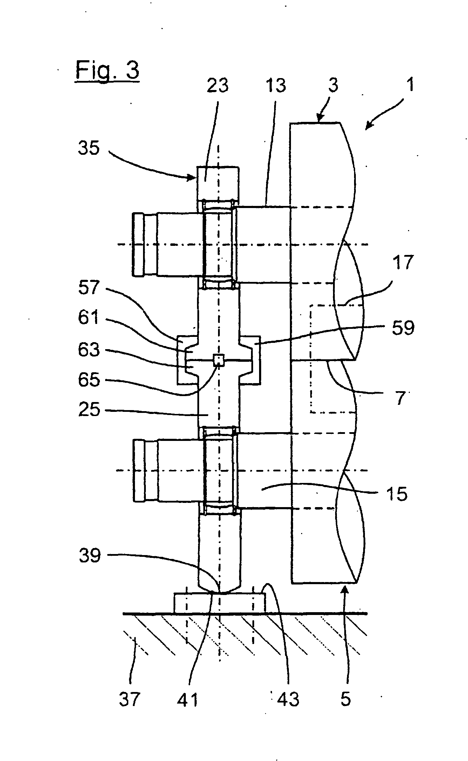

Figur 3 zeigt eine schematische, geschnittene Seitenansicht einer ersten Lagerbockeinheit 35 einer Walzenpresse 1 gemäß einer weiteren Ausführungsform der Erfindung, wobei auch die zweite Lagerbockeinheit in dieser Weise oder auch in einer Weise wie anhand von Figuren 1 und 2 beschrieben ausgebildet sein kann.

Die erste Lagerbockeinheit 35 hat einen unteren und einen oberen Lagerbock 25, 23, die vertikal zueinander benachbart angeordnet sind und in denen jeweils eine Presswalze 3, 5 längsfest derart gelagert ist, dass sich die Presswalze 3, 5 oder ihr interner Mantelträger 13, 15 relativ zum zugehörigen Lagerbock 23, 25 um eine Achse quer zur Walzenachse drehen kann, um z.B. Durchbiegungen der Presswalze 3, 5 bzw. des Mantelträgers 13, 15 und das gewünschte Verkippen der ersten Lagerbockeinheit 35 zu erlauben.

Die Lagerböcke 23, 25 sind separate Bauteile, die in etwa auf Höhe des von den Presswalzen 3, 5 gebildeten Pressspaltes 7 miteinander verbunden sind (d.h. die Trennlinie verläuft in etwa auf Höhe des Pressspaltes 7; wie auch in den Ausführungsformen von Figuren 1 und 2 der Fall), und zwar hier über eine Klammerverbindung mit zwei im Querschnitt C-förmigen Klammern 57, 59, von denen die eine Klammer 57 von der in Presswalzenrichtung gesehen axialen Endseite her und die andere Klammer 59 von der gegenüberliegenden Seite her an den Lagerböcken 23, 25 angesetzt sind. Die Lagerböcke 23, 25 sind an den einander zugewandten Stirnseiten mit einer T-förmigen Verdickung 61, 63 ausgebildet, wobei die Klammern 57, 59 mit ihren C-Schenkeln den dadurch gebildeten Wulst formschlüssig umgreifen; d.h. die C-Schenkel liegen an der jeweiligen von der T-Form ausgebildeten Schulter an, wobei diese jeweilige Schulter leicht schräg ausgebildet ist.

Die Klammern 57, 59 werden z.B. mittels Schrauben oder mittels einer hydraulischen oder pneumatischen Vorrichtung in Längsrichtung der Presswalzen 3, 5 aufeinander zu gepresst, wodurch aufgrund der Schräge der Schultern der T-Form der Verdickungen 61, 63 die Lagerböcke 23, 25 in der Pressebene 17 quer zur Richtung der Presswalzen 3, 5 (hier vertikal) gegeneinander geklemmt werden.

Die Klammerverbindung kann derart fest dimensioniert sein, dass sie per se eine Relativbewegung zwischen den Lagerböcken 23, 25 in Richtung längs der Presswalzen 3, 5 verhindert. Im Falle von als elastisch nachgiebigeren Zugstäben ausgebildeten Klammern 57, 59 kann die Verbindung zwischen den Lagerböcken 3, 5 auch eine Passfeder 65 aufweisen, die an der Verbindungsstelle zwischen den Lagerböcken 23, 25 stirnseitig an diesen angreift und eine Verlagerung der Lagerböcke 23, 25 relativ zueinander in Längsrichtung der Presswalzen 3, 5 zusätzlich unterbindet. Hierzu stellt die Passfeder eine quer zur Pressebene 17 verlaufende Führungsfläche bereit. Die Passfeder kann auch eine Führungsfläche parallel zur Pressebene 17 bereitstellen, um eine Relativbewegung der Lagerböcke 23, 25 quer zur Pressebene 17 zusätzlich zu unterbinden. Eine solche Führungsfläche parallel zur Pressebene 17 ist aber nicht unbedingt erforderlich, sodass die Passfeder von der Frontseite her gesehen z.B. konisch ausgebildet sein kann, sodass sie nur eine Zentrierwirkung im Nicht-Pressbetrieb hat, wohingegen jedoch im Pressbetrieb bei aufgrund der hohen Presskräfte etwas auseinander bewegten Lagerböcken 23 in Richtung quer zur Pressebene 17 keine Führung mehr durch die Passfeder gegeben ist. Anstelle der Passfeder mit einer Führungsfläche kann auch ein Passstift herangezogen werden, sodass sich mit den Lagerböcken ein entsprechend führend und/oder zentrierend wirkender Linienkontakt ergibt.

Weiter ist gemäß der Ausführungsform von Figur 3 zwischen dem unteren Lagerbock 25 und dem als Fundament ausgebildeten Maschinenrahmen 37 ein Schwenklager 39 mit einer quer zur Längsrichtung der Presswalzen 3, 5 verlaufenden Schwenkachse vorgesehen, sodass die erste Lagerbockeinheit 35 insgesamt in einer zur Pressebene 17 parallelen Ebene kippen kann, um dadurch Längenänderungen der Presswalzen 3, 5 auszugleichen. Das Schwenklager 39 ist hier wie jenes in Figur 1 ausgebildet, d.h. der unter Lagerbock 25 hat einen dem Maschinenrahmen 39 zugewandten balligen oder sphärischen Endabschnitt, der als Kontaktabschnitt 41 dient, der auf einer einen Aufnahmeabschnitt 43 bildenden horizontalen Stützfläche abgestützt ist und auf dieser abrollen und auch in Längsrichtung der Presswalzen 3, 5 auf dieser entlang gleiten kann. Somit bildet das Schwenklager 39 ebenfalls ein kombiniertes Schwenk-Los-Lager. Am nicht dargestellten zweiten Ende der Presswalzen 3, 5 können die Presswalzen auf irgendeine geeignete Weise fest gelagert sein, z.B. durch eine wie in der Figur 1 oder der Figur 2 gezeigte zweite Lagerbockeinheit 53.

Die erste Lagerbockeinheit 35 gemäß der Ausführungsform von Figur 3 eignet sich z.B. zur Anwendung auf der Bedienseite der Walzenpresse 1; sie kann aber auch auf der Triebsseite eingesetzt sein.

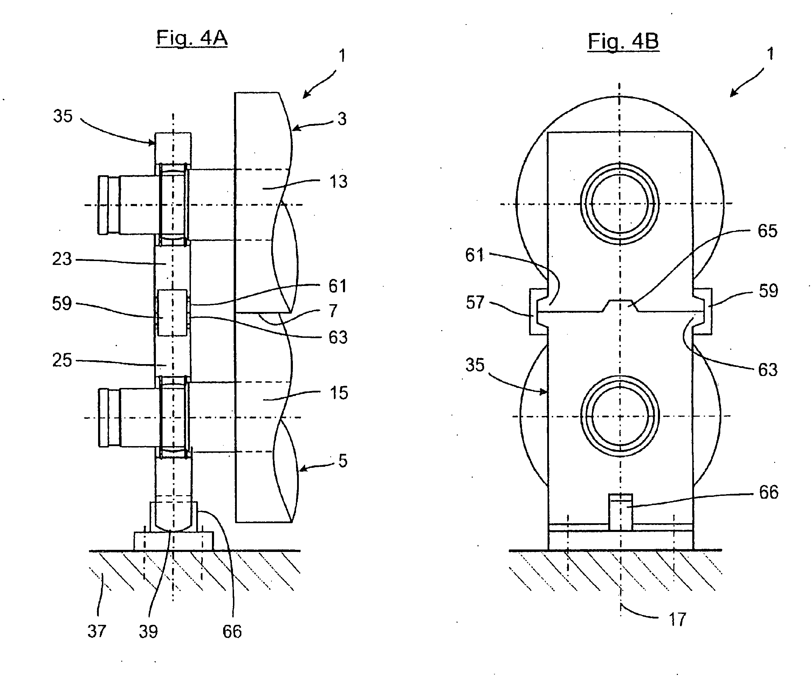

In den Figuren 4A und 4B ist eine erste Lagerbockeinheit 35 einer Walzenpresse 1 nach einer noch anderen Ausführungsform der Erfindung in einer geschnittenen Seitenansicht bzw. in einer Frontansicht dargestellt.

Die erste Lagerbockeinheit 35 hat einen unteren und einen oberen Lagerbock 25, 23, die vertikal zueinander benachbart angeordnet sind und in denen jeweils eine Presswalze 3, 5 längsfest derart gelagert ist, dass sich die Presswalzen 3, 5 oder ihr interner Mantelträger 13, 15 relativ zum zugehörigen Lagerbock 23, 25 um eine Achse quer zur Walzenachse drehen kann, um z.B. Durchbiegungen der Presswalze 3, 5 bzw. des Mantelträgers 13, 15 und das gewünschte Verkippen der ersten Lagerbockeinheit 35 zu erlauben.

Die Lagerböcke 23, 25 sind separate Bauteile, die in etwa auf Höhe des von den Presswalzen 3, 5 gebildeten Pressspaltes 7 miteinander verbunden sind (wie auch in den Ausführungsformen von Figuren 1 bis 3 der Fall), und zwar hier über eine Klammerverbindung mit zwei im Querschnitt C-förmigen Klammern 57, 59, von denen in Richtung quer zu den Presswalzen 3, 5 und quer zur Pressebene 17 gesehen die eine Klammer 57 von der einen Seite her und die andere Klammer 59 von der gegenüberliegenden Seite her an den Lagerböcken 23, 25 stirnseitig angesetzt ist. Die Lagerböcke 23, 25 sind in der Frontansicht gesehen (siehe Figur 4B) an den einander zugewandten Stirnseiten mit einer T-förmigen Verdickung 61, 63 ausgebildet, wobei die Klammern 57, 59 mit ihren C-Schenkeln den dadurch gebildeten Wulst formschlüssig umgreifen; d.h. die C-Schenkel liegen an der jeweiligen von der T-Form ausgebildeten Schulter an, wobei diese jeweilige Schulter leicht schräg ausgebildet ist.

Die Klammern 57, 59 werden z.B. mittels Schrauben oder mittels einer hydraulischen oder pneumatischen Vorrichtung in Richtung quer zu den Presswalzen 3, 5 aufeinander zu gepresst, wodurch aufgrund der Schräge der Schultern der T-Form der Verdickungen 61, 63 die Lagerböcke 23, 25 in der Pressebene 17 quer zur Richtung der Presswalzen 3, 5 gegeneinander geklemmt werden.

Die Klammerverbindung kann derart fest dimensioniert sein, dass sie per se eine Relativbewegung (Schwenk- und/oder Linearbewegung) zwischen den Lagerböcken 23, 25 in Richtung längs der Presswalzen 3, 5 verhindert. Im Falle von als elastisch nachgiebigeren Zugstäben ausgebildeten Klammern 57, 59 kann die Verbindung zwischen den Lagerböcken 3, 5 auch eine Passfeder 65 aufweisen, die wie die anhand der Figur 3 erläuterte Passfeder oder auch als Passstift ausgebildet sein kann. Wie oben erläutert braucht die Passfeder 65 keine Führungsfläche parallel zur Pressebene 17 bereitstellen, sondern die Passfeder 65 kann von der Frontseite hergesehen (siehe Figur 4B) konisch ausgebildet sein, sodass sie nur eine Zentrierwirkung im Nicht-Pressbetrieb hat, wohingegen jedoch im Pressbetrieb bei aufgrund der hohen Presskräfte etwas auseinander bewegten Lagerböcke 23 in Richtung quer zur Pressebene 17 keine Führung mehr durch die Passfeder gegeben ist.

Die Lagerung der ersten Lagerbockeinheit 35 am Maschinenrahmen 37 erfolgt hier durch ein als kombiniertes Schwenk-Los-Lager ausgebildetes Schwenklager 39, dass entsprechend dem Schwenklager 39 der Ausführungsformen von Figuren 1 und 3 ausgebildet ist. Am nicht dargestellten zweiten Ende der Presswalzen 3, 5 können die Presswalzen 3, 5 auf irgendeine geeignete Weise fest gelagert sein, z.B. durch eine wie in der Figur 1 oder in der Figur 2 gezeigte zweite Lagerbockeinheit 53.

Der untere Lagerbock 25 der ersten Lagerbockeinheit 35 ist gegen eine Verschiebung in Bahnlaufrichtung, d.h. in Richtung quer zur Pressebene 17, sowie gegen ein Verkippen in Bahnlaufrichtung, d.h. gegen ein Verkippen um eine Achse parallel zu den Presswalzenlängsachsen, gesichert, und zwar bei dieser Ausführungsform mittels einer Passfeder 66, die fest mit dem Maschinenrahmen 37 verbunden ist und die in einer Ausnehmung in der dem Maschinerahmen 37 zugewandten Stirnseite des unteren Lagerbocks 25 formschlüssig eingreift. Ein derartige Sicherung kann auch bei den ersten Lagerbockeinheiten der anderen Ausführungsformen vorgesehen sein.

Die erste Lagerbockeinheit 35 gemäß der Ausführungsform von Figuren 4A, 4B eignet sich z.B. zur Anwendung auf der Bedienseite der Walzenpresse 1; sie kann aber auch auf der Triebsseite eingesetzt sein.

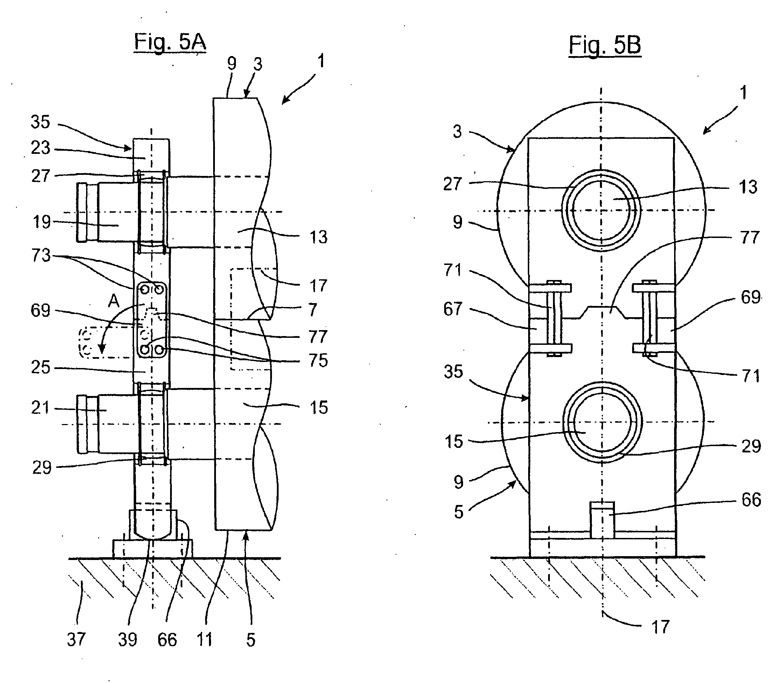

In den Figuren 5A und 5B ist eine Walzenpresse 1 nach noch einer anderen Ausführungsform in einer schematischen, abgeschnittenen Seitenansicht bzw. in einer Frontansicht dargestellt. Die Walzenpresse 1 hat eine erste Lagerbockeinheit 35 auf einer Bedienseite der Walzenpresse 1, mit einem oberen und einem unteren Lagerbock 23, 25, die vertikal zueinander benachbart angeordnet sind und in denen jeweils eine Presswalze 3, 5, die hier z.B. als Mantelwalze mit einem Walzenmantel 9, 11 und einem internen Mantelträger 13, 15 ausgebildet ist, relativ zum zugehörigen Lagerbock 23, 25 längsfest gelagert ist. Hierbei ist die jeweilige Presswalze 3, 5 an ihrem ersten Ende 19, 21 mit einem Endabschnitt des jeweiligen Mantelträgers 13, 15 derart längsfest in einer zugehörigen Lagereinheit 27, 29 aufgenommen, dass sich der aufgenommene Endabschnitt des jeweiligen Mantelträgers 13, 15 relativ zum zugehörigen Lagerbock 23, 25 um eine Achse quer zu den Presswalzen 3, 5 drehen kann, um z.B. Durchbiegungen der Mantelträger 13, 15 und das gewünschte Verkippen der ersten Lagerbockeinheit 35 um eine Achse quer zu den Presswalzen 3, 5 und quer zur Pressebene 17, die von den Presswalzen 3, 5 aufgespannt wird, zu erlauben.

Die Lagerböcke 23, 25 sind als separate Bauteile ausgebildet, die in etwa auf Höhe des von den Presswalzen 3, 5 gebildeten Pressspaltes miteinander verbunden sind (wie auch in den Ausführungsformen von Figuren 1 bis 4B der Fall), und zwar hier über eine Laschenverbindung.

Die Laschenverbindung weist auf beiden Seiten der Pressebene 17 ein Laschenpaket 67, 69 mit mehreren, z.B. 2 bis 6 oder mehr, Laschen 71 auf, die plattenförmig ausgebildet sind (hier als Rechteckplatten mit parallel zur Pressebene 17 und quer zur Presswalzenlängsachse verlaufender Langseite) und die pro Laschenpaket 67, 69 in Reihe aneinander anliegend und miteinander fluchtend vorgesehen sind. Die Laschen 71, d.h. z.B. deren Plattenflächen, verlaufen im Wesentlichen parallel zur Pressebene 17, sodass sie parallel zur Pressebene 17 und damit in Längsrichtung der Presswalzen 3, 5 biegesteif sind. Es kann auch nur eine Lasche 71 auf jeder Seite der Pressebene 17 angeordnet sein; prinzipiell ist auch die Verwendung einer einzigen in der Pressebene 17 verlaufenden Lasche 71 denkbar. Die Laschen 71 sind an jedem Lagerbock 23, 25 mit mehreren Querbolzen 73, 75 befestigt, in diesem Falle zwei Querbolzen 73, 75 pro Lagerbock 23, 25, die sich quer zur Längsrichtung der Presswalzen 3, 5 und quer zur Pressebene 17 erstrecken, sodass damit die Laschen 71 parallel zur Pressebene relativ zu den Lagerböcken 23, 25 drehfest sind. Dadurch wird verhindert, dass die Lagerböcke 23, 25 sich relativ zueinander entlang der Längsrichtung der Presswalzen 3, 5 verlagern und dass die Lagerböcke 23, 25 sich relativ zueinander entlang der Pressebene 17 verschwenken. Damit wird entsprechend den Ausführungsformen von Figuren 2 bis 3B zumindest im Hinblick auf eine Relativbewegung der Lagerböcke 23, 25 zueinander entlang der Pressebene 17 eine starre erste Lagerbockeinheit 35 ausgebildet, wobei bei dieser Ausführungsform eine leichte Relativbewegung der Lagerböcke 23, 25 zueinander in Richtung quer zu den Längsachsen der Pressebene und quer zur Pressebene 17 (= in Bahnlaufrichtung) möglich ist, da die Laschenverbindung in Richtung quer zur Pressebene 17 keinen ausreichend hohen Kippwiderstand hat und da sich auch die Laschen 71 auf der Bahnzuführseite des Pressspalts 7 z.B. etwas stärker längen als auf der Bahnabführseite. Ein hieraus resultierendes seitliches Heraustreten der Längsachse der oberen Presswalze 3 aus der gewünschten Pressebene 17 in Bahnlaufrichtung ist jedoch gering, sodass das Pressergebnis nicht sehr beeinflusst wird. Die Laschen 71 erlauben zudem, wie z.B. die Klammern bei den Ausführungsformen von Figuren 2 bis 3B, dass sich die Lagerböcke 23, 25 im Pressbetrieb parallel zur Pressebene 17 (dies umfasst auch ein im Wesentlichen parallel, wenn man das oben erwähnte Heraustreten der oberen Presswalze 3 aus der Pressebene 17 berücksichtigt) und quer zu den Presswalzen 3, 5 (hier in Vertikalrichtung) voneinander wegbewegen können, wodurch sich die letztlich gewünschte Höhe des Pressspalts 7 im Pressbetrieb ergibt; hierbei werden die Zuglaschen 71 elastisch gedehnt (hier in ihrer Längsrichtung), wobei sie sich im Nichtpressbetrieb wieder Zusammenziehen, sodass die Lagerböcke 23, 25 wieder zueinander in Berührungskontakt bewegt werden.

Zwischen den Lagerböcken 23, 25 kann ein konischer Zentrierzapfen 77 vorgesehen sein, der z.B. an der Stirnseite des unteren oder des oberen Lagerbocks 25, 23 angeformt ist und sich in Richtung zur gegenüberliegende Stirnseite des dann entsprechend oberen bzw. unteren Lagerbocks 23, 25 hin erstreckt, in welchem seinerseits eine komplementär konische Ausnehmung ausgeformt ist, in welche der Zentrierzapfen 77 im Nichtpressbetrieb formschlüssig eingreifen kann, um die Lagerböcke in ihrer Lage zueinander zu zentrieren. Im Pressbetrieb wird der Zentrierzapfen 77 dann aus der Ausnehmung herausgehoben, sodass er keine Zentrierfunktion oder Führungsfunktion mehr hat. Alternativ kann der Zentrierzapfen 77 auch zylindrisch oder als eine Passfeder mit in Front- und Seitenansicht zur Pressebene 17 parallelen Seiten ausgebildet sein, sodass in der Pressebene 17 eine Führungsfunktion entlang der Presswalzen 3, 5 und auch quer dazu gegeben ist.

Die Lagerung der ersten Lagerbockeinheit 35 am Maschinenrahmen 37 (hier als Fundament vorgesehen) erfolgt durch ein als kombiniertes Schwenk-Los-Lager ausgebildetes Schwenklager 39, das entsprechend dem Schwenklager 39 der Ausführungsformen von Figuren 1 und 3A, 3B ausgebildet ist. Am nicht dargestellten zweiten Ende der Presswalzen 3, 5 können die Presswalzen damit auf irgendeine geeignete Weise fest gelagert sein, z.B. durch eine wie in der Figur 1 oder in Figur 2 gezeigte zweite Lagerbockeinheit 53.

Die Lagereinheiten 27, 29 sind hier Pendelbuchsen in Form von sphärischen Buchsen, in denen die Mantelträger 13, 15 fest eingespannt sind und welche in einer entsprechend sphärischen Aufnahme in den Lagerböcken 23, 25 gleitend aufgenommen sind. Bei Ausbildung der ersten und/oder der zweiten Presswalze 2, 5 als massive Presswalze, können die sphärischen Buchsen z.B. als Gleitlager ausgebildet sein, in denen Lagerzapfen der massiven Presswalzen 3, 5 gleitend drehbar und längsfest aufgenommen sind oder können die sphärischen Buchsen Rollenlager z.B. Doppelreihen-Tonnenlager aufweisen, die die gewünschte Verdrehung der Lagerzapfen relativ zum Lagerbock 23, 25 quer zur Längsachse der Presswalze 3, 5 ebenfalls erlauben und ansonsten eine Rolllagerung für die Presswalzen 3, 5 bereitstellen. Auch hydrostatische oder hydrodynamische Gleitlagerungen sind möglich.

Die erste Lagerbockeinheit 35 gemäß der Ausführungsform von Figuren 5A, 5B eignet sich z.B. zur Anwendung auf der Bedienseite der Walzenpresse 1; sie kann aber auch auf der Triebsseite eingesetzt sein, wo sie dann über das Festlager 55 (siehe z.B. Figur 1) am Maschinenrahmen 37 festgelegt ist.

Der untere Lagerbock 25 der ersten Lagerbockeinheit 35 ist gegen eine Verschiebung in Bahnlaufrichtung, d.h. in Richtung quer zur Pressebene 17, sowie gegen ein Verkippen in Bahnlaufrichtung, d.h. gegen ein Verkippen um eine Achse parallel zu den Presswalzenlängsachsen, gesichert, und zwar bei dieser Ausführungsform mittels einer Passfeder 66, die fest mit dem Maschinenrahmen 37 verbunden ist und die in einer Ausnehmung in der dem Maschinerahmen 37 zugewandten Stirnseite des unteren Lagerbocks 25 formschlüssig eingreift.

Gemäß einem Verfahren der Erfindung wird bei einem Mantelwechsel bei der Ausführungsform von Figuren 5A und 5B wie folgt vorgegangen:
In einem ersten Schritt werden für die jeweilige Lasche 71 bzw. für das jeweilige Laschenpaket 67, 69 alle Querbolzen bis auf einen, z.B. den in der Figur 5A linken unteren Querbolzen, entfernt (hier quer zur Pressebene 17 herausgenommen); in einem zweiten Schritt werden die Laschen 71 um den verbleibenden Querbolzen 75 parallel zur Pressebene 17 herausgeschwenkt (entlang Pfeil A in die strichgepunktet dargestellte Position); in einem dritten Schritt werden der obere Lagerbock 23 angehoben und die obere Presswalze 3 dadurch um deren Lagerung an ihrem zweiten Ende nach oben geschwenkt; in einem vierten Schritt wird der Walzenmantel 9 axial über den oberen Lagerbock 23 hinüber entlang der Längsachse der oberen Presswalze 3 entnommen (der obere Lagerbock 23 muss also nicht von der oberen Presswalze 3 abmontiert werden); in einem vierten Schritt kann dann der neue Walzenmantel 9 über den oberen Lagerbock 23 hinüber in Längsrichtung der oberen Presswalze 3 auf den Walzenträger 13 aufgeschoben oder aufgezogen werden. Im Falle dass die Laschen 71 am oberen Lagerbock 23 verbleibend geklappt wurden, kann der Mantelwechsel einfach über die Laschen 71 hinüber wie oben erläutert erfolgen.

Der Walzemantel 11 der unteren Presswalze 3 kann entsprechend längs der Presswalze 3 über den unteren Lagerbock 25 hinweg sowie ggf. über die herausgeklappten Laschen 71 hinweg erfolgen, wofür der untere Lagerbock 25 etwas vom Maschinenrahmen 37 angehoben wird (unter Hochschwenken der unteren Presswalze 5 um deren Lagerung an ihrem zweiten Ende).

Wie bei den Ausführungsformen nach Figuren 1 bis 4B kann auch bei der Ausführungsform nach Figuren 5A und 5B die Lagerung in Form einer Hängeanordnung ausgeführt sein, d.h. die oberen Lagerböcke 23 (der andere obere Lagerbock 45 von z.B. Figur 1 ist hier nicht dargestellt) können am Maschinenrahmen 37 wie hier für die unteren Lagerböcke 25 (der andere untere Lagerbock 47 von z.B. Figur 1 ist hier nicht dargestellt) beschrieben gelagert sein, wobei dann die unteren Lagerböcke 25 nur über die Laschenverbindung, indirekt mit dem Maschinenrahmen 37 verbunden sind. Es können auch ein unterer Lagerbock der einen Lagerbockeinheit und ein oberer Lagerbock der anderen Lagereinheit mit dem Maschinenrahmen verbunden sein, wobei die jeweiligen anderen Lagerböcke indirekt mit dem Maschinenrahmen verbunden sind.

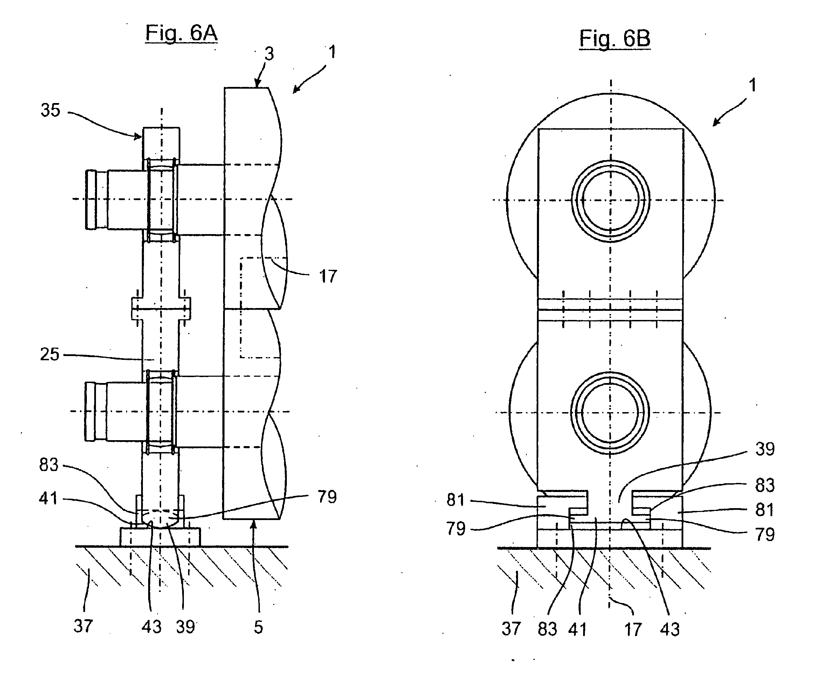

Figuren 6A und 6B zeigen eine Walzenpresse 1 gemäß einer noch anderen Ausführungsform der Erfindung in einer abgeschnittenen, schematischen Seitenansicht bzw. einer Frontansicht. Diese Ausführungsform ist im Wesentlichen gleich jener von Figur 1 aufgebaut, sodass insofern auf die obige Beschreibung von Figur 1 verwiesen wird.

Im Unterschied ist bei dieser Ausführungsform das als kombiniertes Schwenk-Los-Lager ausgebildete Schwenklager 39 zwischen dem unteren Lagerbock 25 der ersten Lagerbockeinheit 35 und dem Maschinenrahmen derart ausgebildet, dass der untere Lagerbock 25 nicht einfach nur mit seinem balligen Kontaktabschnitt 41 auf dem flächigen Aufnahmeabschnitt 43 aufgesetzt ist, so dass er sich davon abheben kann, sondern der ballige Kontaktabschnitt 41 ist in Richtung quer zur Pressebene 17 mit zwei sich in dieser Richtung erstreckenden Flügeln 79 versehen, sodass er in der Frontansicht (Figur 6B) eine T-Form hat. Die Flügel 59 ihrerseits werden seitlich von Haltebacken 81 des Kontaktabschnitts 41 formschlüssig (in der Frontansicht) umgriffen, sodass sich in dieser Ausführungsform der untere Lagerbock 25 und damit die erste Lagerbockeinheit 35 nicht vom Maschinenrahmen 37 abheben können.

Die Flügel 79 sind in der Seitenansicht von Figur 6A gesehen oben und unten ballig ausgebildet und sind in von den Haltebacken 81 gebildeten Führungsnuten 83 in Richtung der Presswalzen 3, 5 geführt. Aufgrund der Balligkeit der Flügel 79 kann der untere Lagerbock 25 und damit die erste Lagerbockeinheit 35 um eine Schwenkachse quer zu den Presswalzen 3, 5 und quer zur Pressebene 17 kippen, wodurch an dieser Stelle ein Schwenklager 39 gebildet ist.

Die erste Lagerbockeinheit 35 nach dieser Ausführungsform kann z.B. auf der Bedienseite verwendet werden.

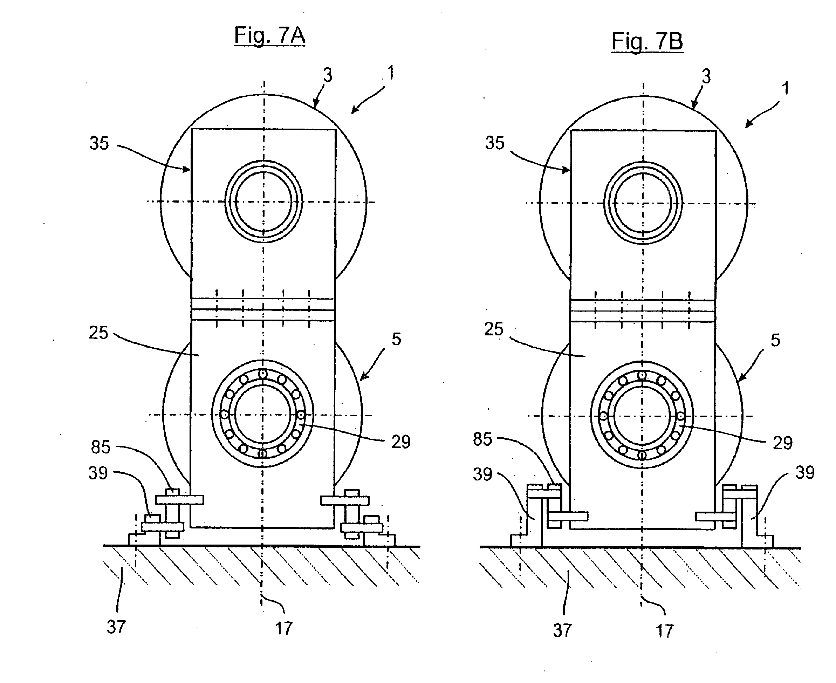

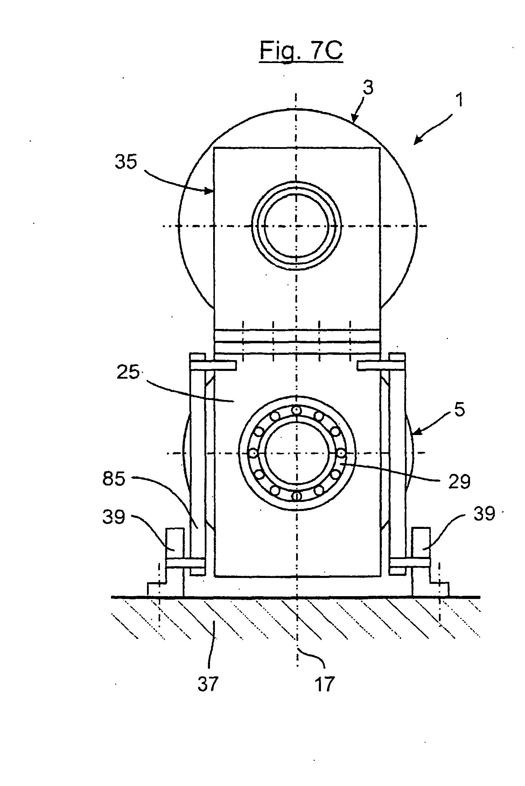

In den Figuren 7A, 7B und 7C sind drei alternative Varianten zur Gestaltung eines als kombiniertes Schwenk-Los-Lager ausgebildeten Schwenklagers 39 einer Walzenpresse 1 gemäß der Erfindung schematisch in einer Frontansicht dargestellt (in der Figur 7A eine instabile Variante und in den Figuren 7B und 7C jeweils eine stabile Varianten).

Gemäß Figur 7A ist hierzu der untere Lagerbock 25 der ersten Lagerbockeinheit 35 über einen sich im Wesentlichen vertikal senkrecht zu den Presswalzen 3, 5 und parallel zur Pressebene 17 erstreckenden Lagerhebel 85 am stationären Maschinenrahmen 37 angebracht, wobei der Lagerhebel 85 mit einem oberen Endabschnitt am unteren Lagerbock 25 und mit einem unteren Endabschnitt am Maschinenrahmen 37 gelenkig angebracht ist. Die jeweilige gelenkige Anbringung ist derart, dass die zugehörigen Gelenkachsen zueinander parallel und quer zur Pressebene 17 verlaufen, wobei die obere Gelenkachse unterhalb der Walzenlagerung (Drehachse der Lagereinheit 29) liegt. Damit kann der untere Lagerbock 25 (und mit ihm die erste Lagerbockeinheit 35) zum einen um eine Achse quer zu den Presswalzen 3, 5 und quer zur Pressebene 17 kippen und zum anderen auch eine Bewegung längs der Presswalzen 3, 5 erfahren; die aus letztgenannter Längsbewegung resultierende vertikale Bewegung des unteren Lagerbocks 25 und damit der ersten Lagerbockeinheit 35 ist gering; als Abstand zwischen den Gelenkachsen sind z.B. 80-120mm vorgesehen. Insgesamt ist damit ein Schwenklager 39 in Form eines kombinierten Schwenk-Los-Lagers zwischen dem unteren Lagerbock 25 und dem Maschinenrahmen 37 ausgebildet.

Die in der Figur 7B gezeigte Variante ist zu der in der Figur 7A gezeigten Variante ähnlich, mit dem Unterschied, dass nunmehr der obere Endabschnitt des Lagerhebels 85 des Schwenklagers 39 mit dem Maschinenrahmen 37 und der untere Endabschnitt des Lagerhebels 85 des Schwenklagers 39 mit dem unteren Lagerbock 21 der ersten Lagerbockeinheit 35 verbunden sind; beide Gelenkachsen befinden sich unterhalb der Lagereinheit 29 der unteren Presswalze 5.

Die in der Figur 7C gezeigte Variante ist zu der in der Figur 7A gezeigten Variante ebenfalls ähnlich, mit dem Unterschied, dass nunmehr der obere Endabschnitt des oberen Lagerhebels 85 des Schwenklagers 39 oberhalb der Lagereinheit 29 der unteren Presswalze 5 mit dem unteren Lagerbock 25 und der untere Endabschnitt des Lagerhebels 85 des Schwenklagers 39 unterhalb davon mit dem Maschinenrahmen 37 verbunden sind.

Die in den Figuren 7A und 7B dargestellten Varianten der ersten Lagerbockeinheit 35 können z.B. alternativ als erste Lagerbockeinheit 35 in den Ausführungsformen von Figuren 1 und 3A bis 6B herangezogen werden.

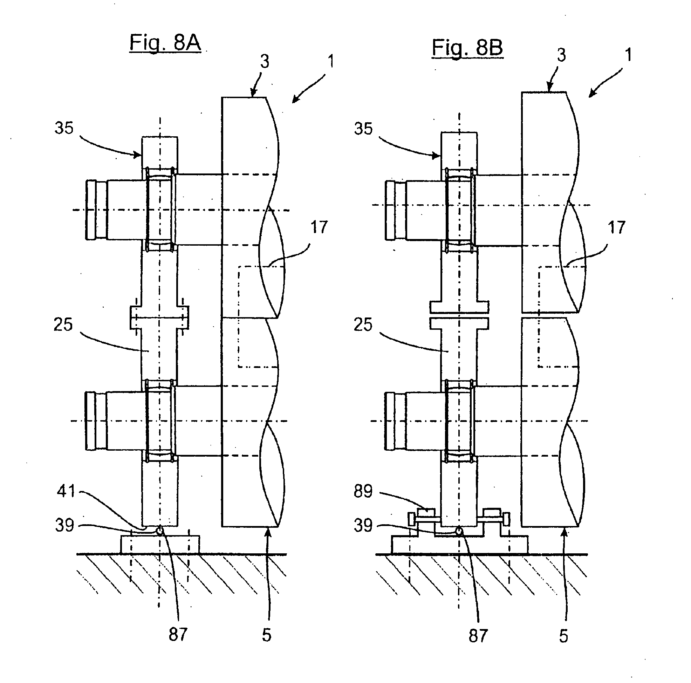

In den Figuren 8A und 8B sind zwei weitere alternative Varianten zur Gestaltung eines als kombiniertes Schwenk-Los-Lager ausgebildeten Schwenklagers 39 einer Walzenpresse 1 gemäß der Erfindung schematisch in Seitenansicht dargestellt (beides sind instabile varianten).

Gemäß Figur 8A ist hierzu der untere Lagerbock 25 der ersten Lagerbockeinheit 35 mit seiner stirnseitigen, hier eben ausgebildeten Kontaktfläche 41 auf eine Kugel oder eine Rolle 87 mit quer zu den Presswalzen 3, 5 und quer zur Pressebene 17 sich erstreckender Rollenachse aufgesetzt, sodass der untere Lagerbock 25 und damit die erste Lagerbockeinheit 35 auf der Kugel oder Rolle 87 in Richtung der Presswalzen 3, 5 rollen und auch in dieser Richtung kippen kann. Die Kugel oder die Rolle 87 können in einer sphärischen Ausnehmung bzw. in einer länglichen Ausnehmung mit Rundquerschnitt, z.B. Halbkreisquerschnitt, aufgenommen sein, sodass sie besser gegen ein Weggleiten relativ zum Maschinenrahmen 37 gesichert ist.

Die in der Figur 8B gezeigte Variante ist zu jener in Figur 8A ähnlich, mit dem zusätzlichen Merkmal, dass die Position der der Kontaktfläche 41 in Richtung der Presswalzen 3, 5 mittels einer Einstellvorrichtung 89 einstellbar ist, in diesem Falle wird die Einstellvorrichtung 89 von in Längsrichtung der Presswalzen 3, 5 gesehen an einander gegenüberliegenden Seiten des unteren Lagerbocks 21 angreifenden Schrauben gebildet; alternativ zu den Schrauben kann auch eine hydraulische oder pneumatische Verstellung vorgesehen sein. Die Einstellmöglichkeit wird z.B. für das Aneinandermontieren des oberen und des unteren Lagerbocks verwendet, um den unteren Lagerbock 25 zu zentrieren, sodass der obere Lagerbock einfacher mit dem unteren Lagerbock 25 verbindbar ist; nach der Montage der ersten Lagerbockeinheit 35 wird die Einstellvorrichtung 89 dann z.B. wieder außer Eingriff vom unteren Lagerbock 25 gebracht, sodass das Schwenklager 39 ungehindert als kombiniertes Schwenk-Los-Lager funktionieren kann.

Die in den Figuren 8A und 8B dargestellten Varianten der Lagerung der ersten Lagerbockeinheit 35 können z.B. alternativ als Schwenklager 39 der ersten Lagerbockeinheit 35 in den Ausführungsformen von z.B. Figuren 1 und 3A bis 6B herangezogen werden; die erste Lagerbockeinheit 35 nach Figuren 8A und 8B kann z.B. in dieser Weise auf der Bedienseite vorgesehen sein.

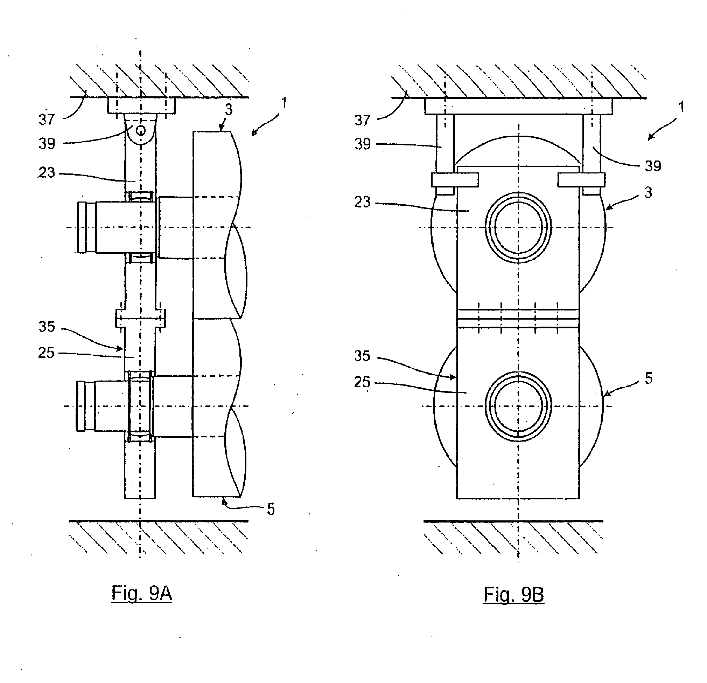

Figuren 9A bis 9C zeigen noch andere Ausführungsformen einer Walzenpresse 1 gemäß der Erfindung.

Bei der in den Figuren 9A und 9B in abgeschnittener Seitenansicht bzw. in Frontansicht dargestellten Variante ist die erste Lagerbockeinheit 35 entsprechend der in Figur 2 dargestellten Variante über ein als Bolzengelenk mit stationärer Schwenkachse ausgebildetes Schwenklager 39 mit dem Maschinenrahmen 37 verbunden, wobei das Schwenklager 39 im Unterschied zur Ausführungsform von Figur 2 jedoch nicht zwischen dem Maschinenrahmen 37 und dem unteren Lagerbock 25, sondern zwischen dem Maschinenrahmen 37 und dem oberen Lagerbock 23 der ersten Lagerbockeinheit 35 vorgesehen ist. Der obere und der untere Lagerbock 23, 25 können in einer wie in den vorigen Ausführungsformen beschriebenen Weise miteinander verbunden sein; ebenso können die Presswalzen 3, 5 wie in den oben beschriebenen Ausführungsformen ausgebildet und in der ersten Lagerbockeinheit 35 gelagert sein.

Die Lagerung der Presswalzen 3, 5 an deren nicht in Figur 9A dargestelltem zweiten Ende kann z.B. auf eine wie in der Figur 1 gezeigten Weise erfolgen; gleiches gilt für die Lagerung der zweiten Lagerbockeinheit am Maschinenrahmen 37.

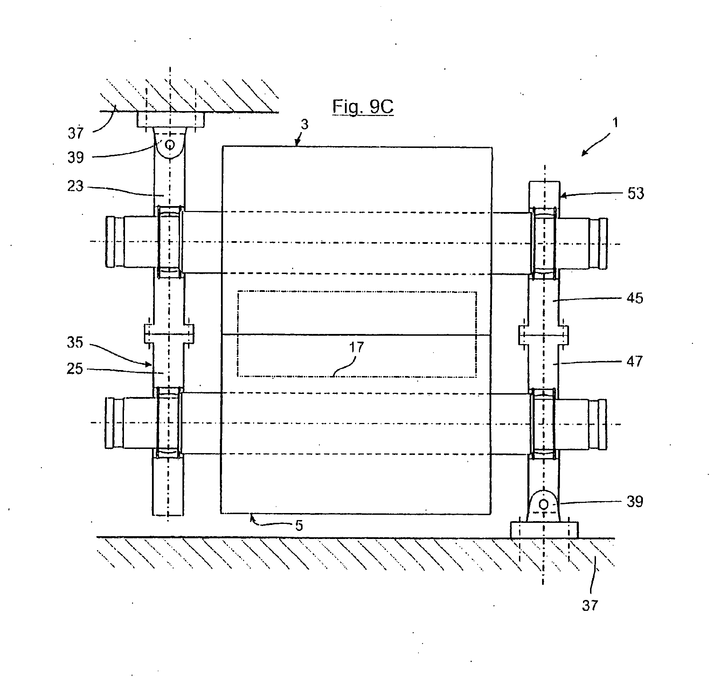

Bei der in Figur 9C gezeigten Variante ist eine erste Lagerbockeinheit 35 der Walzenpresse 1 gemäß jener in Figur 9A gezeigten ausgebildet und am Maschinenrahmen 37 gelagert, nämlich über das Schwenklager 39 zwischen dem oberen Lagerbock 23 und dem Maschinenrahmen 39. Die zweite Lagerbockeinheit 53 am zweiten Ende der Presswalzen 3, 5 ist ähnlich zu der in Figur 2 gezeigten, ersten Lagerbockeinheit 35 ausgebildet und gelagert, nämlich über ein Schwenklager 39 zwischen dem unteren Lagerbock 47 und dem Maschinenrahmen 37.

Bei der in Figur 9C gezeigten Variante sind jedoch beide Presswalzen 3, 5 an ihren beiden Enden längsfest in den Lagerböcken 23, 25, 45, 47 aufgenommen; eine Kompensation der Längenänderung von den beiden Presswalzen 3, 5 wird dadurch erreicht, dass beide Lagerbockeinheiten 35, 53 insgesamt um die Schwenkachse des jeweiligen Schwenklagers 39, die quer zu den Presswalzen 3, 5 und quer zu der Pressebene 17 verläuft, schwenken können.

Es ist zu bemerken, dass die obigen Ausführungsformen nur Beispiele darstellen und dass die einzelnen Bauelemente und Bauweisen im Rahmen statischer Bestimmtheit untereinander austauschbar sind und/oder in anderen Raumlagen angeordnet sein können. D.h., dass z.B. als Pendelbuchsen dargestellte Lager auch als Walzenlager vorgesehen sein können, wenn z.B. eine Massivwalze dort drehbar zu lagern ist, und umgekehrt.

Die Massivwalze von Figur 2 kann oben und die dortige Mantelwalze unten angeordnet sein, usw.

## Patentansprüche

1. Walzenpresse (1) mit einer ersten Presswalze (3) und einer zweiten Presswalze (5), die miteinander einen Pressspalt (7) bilden, wobei die Presswalzen (3, 5) an einem ersten Ende in zueinander benachbarten Lagerböcken (23, 25) gelagert sind, die derart aneinander befestigt sind, dass sie in Längsrichtung der Presswalzen (3, 5) unter Ausbildung einer ersten Lagerbockeinheit (35) relativ zueinander unbeweglich sind, **dadurch gekennzeichnet, dass** die erste Lagerbockeinheit (35) insgesamt um ein erstes Schwenklager (39) mit einer Schwenkachse quer zur Längsrichtung der Presswalzen (3, 5) schwenkbar an einem stationären Maschinenrahmen (37) gelagert ist.

2. Walzenpresse (1) nach Anspruch 1, wobei die erste Lagerbockeinheit (35) am Maschinenrahmen (37) in Richtung der Presswalzen (3, 5) längsverschiebbar gelagert ist.

3. Walzenpresse (1) nach Anspruch 1, wobei eine der Presswalzen (5) an einem Ende in ihrer dortigen Lagerung in Längsrichtung der Presswalzen (3, 5) längsverschiebbar gelagert ist.

4. Walzenpresse (1) nach Anspruch 1, wobei die Presswalzen (3, 5) an ihrem zweiten Ende in zueinander benachbarten Lagerböcken (45, 47) gelagert sind, die derart aneinander befestigt sind, dass sie in Längsrichtung der Presswalzen (3, 5) unter Ausbildung einer zweiten Lagerbockeinheit (53) relativ zueinander unbeweglich sind, wobei die zweite Lagerbockeinheit (53) mit dem stationären Maschinenrahmen (37) starr verbunden ist oder insgesamt um ein zweites Schwenklager (39) mit einer zur Schwenkachse des ersten Schwenklagers (39) parallelen Schwenkachse quer zur Längsrichtung der Presswalzen (3, 5) schwenkbar an dem stationären Maschinenrahmen (37) gelagert ist.

5. Walzenpresse (1) nach Anspruch 1, wobei die Lagerböcke (23, 25; 45, 47) der ersten und/oder der zweiten Lagerbockeinheit (35; 53) insgesamt starr aneinander befestigt sind.

6. Walzenpresse (1) nach Anspruch 1, wobei die Lagerböcke (23, 25; 45, 47) der ersten und/oder der zweiten Lagerbockeinheit (35; 53) über Klammern (57, 59) aneinander gehalten sind, die in Längsrichtung oder quer zur Längsrichtung der Presswalzen (3, 5) an einander gegenüberliegenden Seiten der Lagerböcke (23, 25; 45, 47) an diesen angreifen.

7. Walzenpresse (1) nach Anspruch 1, wobei die Lagerböcke (23, 25; 45, 47) der ersten und/oder der zweiten Lagerbockeinheit (35; 53) über in Längsrichtung der Presswalzen (3, 5) biegefeste Zuglaschen (71) aneinander gehalten sind, die quer zur Längsrichtung der Presswalzen (3, 5) an einander gegenüberliegenden Seiten der Lagerböcke (23, 25; 45, 47) an diesen unschwenkbar angebracht sind.

8. Walzenpresse (1) nach Anspruch 7, wobei auf jeder Seite der Lagerböcke (23, 25) ein Laschenpaket (67, 69) mit mehren Zuglaschen (71) vorgesehen ist, welche quer zur Längsrichtung der Presswalzen (3, 5) hintereinander liegend angeordnet sind.

9. Walzenpresse (1) nach Anspruch 1 , wobei die erste Presswalze (3) und/oder die zweite Presswalze (5) eine Schuhwalze mit einem Walzenmantel und einem Pressschuh ist, der von innen gegen den Walzenmantel drückbar ist.

10. Walzenpresse (1) nach Anspruch 9, wobei der Walzenmantel der einen Presswalze ein flexibler Walzenmantel ist und wobei der Pressschuh an seiner der Walzenmantelinnenseite zugewandten Pressfläche mit einer Konkavität vorgesehen ist, welche in etwa komplementär zu einer von der anderen Walze gebildeten Konvexität ist, so dass der flexible Walzenmantel unter Anpassung seiner Umfangsfläche an die Konvexität der anderen Walze gegen diese pressbar ist, um **dadurch** einen in Richtung quer zu den Presswalzen verlängerten Pressspalt auszubilden.

11. Papierherstellanlage oder Zellstoffherstellanlage, mit einer Nasspresse, die eine Walzenpresse (1) nach einem der vorhergehenden Ansprüche aufweist.

12. Schuhkalander mit einer Walzenpresse (1) nach Anspruch 9 oder 10.

## Claims

1. A roller press (1) including a first press roll (3) and a second press roll (5) forming together a press nip (7), wherein said press rolls (3, 5) are supported at a first end in bearing blocks (23, 25) adjacent to each other and attached to each other such as to be immoveable with respect to each other in longitudinal direction of said press rolls (3, 5) thereby forming a first bearing block unit (35), **characterized in that** said first bearing block unit (35) is supported on a stationary machine frame (37) to be as a whole rotatable about a first pivot bearing (39) with a pivot axis transverse to the longitudinal direction of said press rolls (3, 5).

2. The roller press (1) according to claim 1, wherein the first bearing block unit (35) is supported on said machine frame (37) to be longitudinally displaceable in the direction of said press rolls (3, 5).

3. The roller press (1) according to claim 1, wherein one of said press rolls (5) is supported at one end in its bearing thereat to be longitudinally displaceable in the longitudinal direction of said press rolls (3, 5).

4. The roller press (1) according to claim 1, wherein said press rolls (3, 5) are supported at their second end in bearing blocks (45, 47) adjacent to each other and attached to each other such as to be immoveable with respect to each other in the longitudinal direction of said press rolls (3, 5) thereby forming a second bearing block unit (53), wherein said second bearing block unit (53) is fixedly connected to said stationary machine frame (37) or is supported on said stationary machine frame (37) to be as a whole rotatable about a second pivot bearing (39) with a pivot axis parallel to said pivot axis of the first pivot bearing (39) transverse to the longitudinal direction of said press rolls (3, 5).

5. The roller press (1) according to claim 1, wherein said bearing blocks (23, 25; 45, 47) of said first and/or said second bearing block unit (35; 53) are fixedly connected to each other as a whole.

6. The roller press (1) according to claim 1, wherein said bearing blocks (23, 25; 45, 47) of said first and/or said second bearing block unit (35; 53) are held against one another by brackets (57, 59) engaging the bearing blocks in the longitudinal direction or transverse to the longitudinal direction of said press rolls (3, 5) on opposite sides of said bearing blocks (23, 25; 45, 47).

7. The roller press (1) according to claim 1, wherein said bearing blocks (23, 25; 45, 47) of said first and/or said second bearing block unit (35; 53) are held against one another by tension bars (71) which are bend-proof in the longitudinal direction of said press rolls (3, 5) and which are non-rotatably mounted to said bearing blocks on, transverse to the longitudinal direction of said press rolls (3, 5), opposite sides of said bearing blocks (23, 25; 45, 47).

8. The roller press (1) according to claim 7, wherein a bar pack (67, 69) with a plurality of tension bars (71) is provided on each side of said bearing blocks (23, 25), which are arranged one behind the other transverse to the longitudinal direction of said press rolls (3, 5).

9. The roller press (1) according to claim 1, wherein said first press roll (3) and/or said second press roll (5) is a shoe roll including a roll shell and a press shoe which can be pressed against said roll shell from the inside.

10. The roller press (1) according to claim 9, wherein said roll shell of said one press roll is a flexible roll shell and said press shoe is provided with a concavity on its pressing surface facing the inner side of said roll shell, which is approximately complementary to a convexity formed by the other roll so that said flexible roll shell can be pressed against the other roll with adapting its peripheral surface to the convexity thereof to thereby form a press nip extended in the direction transverse to said press rolls.

11. A paper production equipment or cellulose production equipment including a wet press which comprises a roller press (1) according to one of the preceding claims.

12. A shoe calender including a roller press (1) according to claim 9 or 10.

## Revendications

1. Presse à rouleaux (1), comportant un premier rouleau de compression (3) et un deuxième rouleau de compression (5) qui forment conjointement une fente de compression (7), lesdits rouleaux de compression (3, 5) étant logés par une première extrémité dans des supports de palier (23, 25) adjacents l'un à l'autre, qui sont fixés l'un à l'autre de telle sorte que, dans la direction longitudinale des rouleaux de compression (3, 5), ils sont immobiles l'un par rapport à l'autre moyennant la formation d'une première unité de support de palier (35), **caractérisée en ce que** la première unité de support de palier (35) est montée sur un bâti (37) stationnaire de la machine de manière à pouvoir pivoter dans son ensemble transversalement à la direction longitudinale des rouleaux de compression (3, 5) autour d'un premier palier de pivotement (39) avec un axe de pivotement.

2. Presse à rouleaux (1) selon la revendication 1, dans laquelle la première unité de support de palier (35) est montée sur le bâti (37) de la machine de manière mobile longitudinalement dans la direction des rouleaux de compression (3, 5).

3. Presse à rouleaux (1) selon la revendication 1, dans laquelle l'un des rouleaux de compression (5), au niveau d'une extrémité dans sa position à cet emplacement, est monté de manière mobile longitudinalement dans la direction longitudinale des rouleaux de compression (3, 5).

4. Presse à rouleaux (1) selon la revendication 1, dans laquelle les rouleaux de compression (3, 5), au niveau de leur deuxième extrémité, sont montés dans des supports de palier (45, 47) adjacents l'un à l'autre, qui sont fixés l'un à l'autre de telle sorte que, dans la direction longitudinale des rouleaux de compression (3, 5), ils sont immobiles l'un par rapport à l'autre moyennant la formation d'une deuxième unité de support de palier (53), ladite deuxième unité de support de palier (53) étant assemblée de manière fixe au bâti (37) stationnaire de la machine ou étant montée sur le bâti (37) stationnaire de la machine de manière à pouvoir pivoter dans son ensemble transversalement à la direction longitudinale des rouleaux de compression (3, 5) autour d'un deuxième palier de pivotement (39) avec un axe de pivotement parallèle à l'axe de pivotement du premier palier de pivotement (39).

5. Presse à rouleaux (1) selon la revendication 1, dans laquelle les supports de palier (23, 25 ; 45, 47) de la première et/ou de la deuxième unité de support de palier (35 ; 53) sont fixés dans l'ensemble de manière rigide l'un à l'autre.

6. Presse à rouleaux (1) selon la revendication 1, dans laquelle les supports de palier (23, 25 ; 45, 47) de la première et/ou de la deuxième unité de support de palier (35 ; 53) sont maintenus l'un contre l'autre par des pinces (57, 59) qui, sur des côtés face à face des supports de palier (23, 25 ; 45, 47), entrent en contact avec ceux-ci dans la direction longitudinale ou transversalement à la direction longitudinale des rouleaux de compression (3, 5).

7. Presse à rouleaux (1) selon la revendication 1, dans laquelle les supports de palier (23, 25 ; 45, 47) de la première et/ou de la deuxième unité de support de palier (35, 53) sont maintenus l'un contre l'autre au moyen de pattes de traction (71), qui sont résistantes à la flexion dans la direction longitudinale des rouleaux de compression (3, 5) et qui, sur des côtés face à face des supports de palier (23, 25 ; 45, 47), sont montés sur ceux-ci de manière à ne pas pouvoir pivoter transversalement à la direction longitudinale des rouleaux de compression (3, 5).

8. Presse à rouleaux (1) selon la revendication 7, dans laquelle sur chaque côté des paliers de support (23, 25) est prévu un ensemble de pattes (67, 69) avec plusieurs pattes de traction (71), qui sont disposées horizontalement les unes derrière les autres transversalement à la direction longitudinale des rouleaux de compression (3, 5).

9. Presse à rouleaux (1) selon la revendication 1, dans laquelle le premier rouleau de compression (3) et/ou le deuxième rouleau de compression (5) est un rouleau à sabot avec une chemise de rouleau et un sabot comprimeur, qui est apte à être poussé de l'intérieur contre la chemise du rouleau.

10. Presse à rouleaux (1) selon la revendication 9, dans laquelle la chemise de l'un des rouleaux de compression est une chemise flexible et dans laquelle le sabot comprimeur, sur sa face de compression orientée vers la face intérieure de la chemise du rouleau, est réalisé avec une concavité qui est sensiblement complémentaire à une convexité formée par l'autre rouleau, de telle sorte que la chemise flexible du rouleau peut être pressée contre l'autre rouleau sous l'effet d'une adaptation de sa surface périphérique à la convexité de l'autre rouleau, afin de former ainsi une fente de compression prolongée dans la direction transversalement aux rouleaux de compression.

11. Installation de fabrication de papier ou installation de fabrication de pâte de cellulose, comportant une presse humide, qui comporte une presse à rouleaux (1) selon l'une quelconque des revendications précédentes.

12. Calandre à sabot avec une presse à rouleaux (1) selon la revendication 9 ou 10.
